# EUROPÄISCHE PATENTSCHRIFT

(11) **EP 4 474 254 B1**
(45) Veröffentlichungstag und Bekanntmachung des Hinweises auf die Patenterteilung: **08.07.2026**
(21) Anmeldenummer: 24201760.6
(22) Anmeldetag: 04.05.2023
(51) Int. Cl.: B62D 15/02

(54) **VERFAHREN ZUM ERKENNEN EINER ASYMMETRIE EINER FAHRWERKSGEOMETRIE EINES KRAFTFAHRZEUGS SOWIE VERFAHREN ZUM BETREIBEN EINES KRAFTFAHRZEUGS**
METHOD FOR DETECTING ASYMMETRY OF A CHASSIS GEOMETRY OF A MOTOR VEHICLE AND METHOD FOR OPERATING A MOTOR VEHICLE
PROCÉDÉ DE DÉTECTION D'UNE ASYMÉTRIE D'UNE GÉOMÉTRIE DE CHÂSSIS D'UN VÉHICULE AUTOMOBILE ET PROCÉDÉ DE FONCTIONNEMENT D'UN VÉHICULE AUTOMOBILE

(30) Priorität: 17.06.2022 DE 102022206105
(43) Veröffentlichungstag der Anmeldung: 11.12.2024
(62) Teilanmeldung aus: 23171606.9
(73) Patentinhaber: VOLKSWAGEN AG, 38440 Wolfsburg (DE)
(72) Erfinder: Ackert, Lukas, 38373 Frellstedt (DE); Münning, Dr. Daniel, 38124 Braunschweig (DE); Thiemann, Hendrik, 38554 Weyhausen (DE)

(56) Entgegenhaltungen:
- DE-A1- 102019 111 415

## Beschreibung

Die Erfindung betrifft ein Verfahren zum Betreiben eines Kraftfahrzeugs.

Vielfältige Probleme bzw. Abweichungen vom Auslieferungszustand am Fahrwerk eines Fahrzeuges können zu einem ungewollten Fahrverhalten führen. Falsch gewuchtete Räder eines Fahrzeugs können zu einem Schwingen eines Radträgers, einer Lenkung und damit auch des Fahrzeugs führen. Auch montierte Schneeketten äußern sich im Fahrverhalten des Fahrzeugs. Fehlgewuchtete Räder oder Schneeketten sind Phänomene, die sich auch durch einen ungeübten Fahrer recht schnell erkennen lassen. Weiterhin gibt es Auffälligkeiten wie eine verstellte Spur, die durch den Fahrer nicht unbedingt leicht am Fahrverhalten erkannt werden können, aber das Verhalten von Assistenzfunktionen des Fahrzeugs erheblich verschlechtern und den Verschleiß am Fahrzeug erhöhen können. Eine verstellte Spur kann enorme Auswirkungen auf Durchführungszeiten eines assistierten Spurwechsels haben und damit für eine stark erhöhte Abbruchquote des Spurwechsels sorgen. Sorgt eine leicht verstellte Spur des Fahrzeugs für einen Drang des Fahrzeugs in eine Richtung, kann ein automatisierter Spurwechsel in diese Richtung systematisch zu schnell durchgeführt werden, was in einem Abbruch des Spurwechsels endet.

Aus der EP 1 975 040 A1 ist ein Verfahren zur Detektion und Kompensation periodischer Störungen in einer Lenkeinrichtung eines Kraftfahrzeugs bekannt. Hierfür wird eine geschwindigkeitsabhängige Zielfrequenz ermittelt, die einer Radrotationsfrequenz entspricht und eine Fourier-Analyse eines zeitlichen Verlaufs einer Lenkkraft oder eines Lenkmoments ausschließlich für die ermittelte Zielfrequenz bzw. für deren Vielfaches durchgeführt. Die so gewonnenen Amplituden werden abhängig von der Fahrzeuggeschwindigkeit aufgetragen und eine Modellfunktion an diese Kurve angepasst, deren angepasster Parameter dann ein robustes Maß für die Störungen darstellt. Abhängig von diesem Parameter werden die Störungen mittels gezielter Einwirkung auf eine Fremdunterstützung der Lenkung unterdrückt.

Darüber hinaus ist aus der DE 10 2009 053 404 A1 ein Verfahren zur Diagnose mindestens eines Fehlers in einem Fahrwerk eines Fahrzeugs bekannt.

Weiterhin offenbart die DE 10 2008 036 001 A1 ein Verfahren zum Betreiben eines Lenksystems zum Lenken eines Kraftfahrzeugs, bei welchem ein Ausmaß einer Störwirkung auf das Lenksystem abgeschätzt wird. In Abhängigkeit von dem abgeschätzten Ausmaß der Störwirkung wird ein elektrisches Signal erzeugt und eine elektrische Lenkhilfe unterstützt das Lenken mittels des erzeugten Signals.

Weiterhin ist aus der DE 10 2019 111 415 A1 ein System und Verfahren zum passiven und aktiven Überwachen und Bestimmen einer Position mindestens einer mechanischen Anomalie für ein Servolenkungssystem eines Fahrzeugs bekannt.

Es ist die Aufgabe der Erfindung, eine Lösung zu schaffen, welche ein besonders sicheres Betreiben eines Kraftfahrzeugs beim Ermitteln eines Fehlers in einem Fahrwerk des Kraftfahrzeugs ermöglicht.

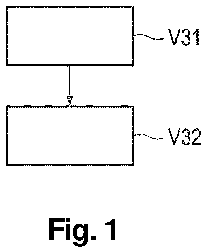

Diese Aufgabe wird durch den Gegenstand des unabhängigen Anspruchs 1 gelöst. Weitere mögliche Ausgestaltungen der Erfindung sind im abhängigen Anspruch 2, der Beschreibung und der Figur 1 offenbart.

Die Erfindung betrifft ein Verfahren zum Betreiben eines Kraftfahrzeugs, bei welchem anhand von in einem Fahrwerk des Kraftfahrzeugs auftretenden Vibrationen eine Unwucht von Rädern des Kraftfahrzeugs und/oder ein Vorhandensein von Schneeketten an den Rädern des Kraftfahrzeugs erkannt wird. Diese Vibrationen können beispielsweise über eine schnelle Fourier-Transformation ausgewertet werden. Im Rahmen der Auswertung kann festgestellt werden, ob die ermittelten Vibrationen durch die Unwucht der Räder des Kraftfahrzeugs und/oder durch das Vorhandensein von Schneeketten an den Rädern des Kraftfahrzeugs verursacht ist. Wird festgestellt, dass die gemessenen Vibrationen einen vorgegebenen Schwellenwert überschreiten, dann wird eine Lenkmomentgrenze einer Handerkennung heraufgesetzt. Die Handerkennung ist dazu eingerichtet, festzustellen, ob der Fahrer seine Hände am Lenkrad hat. Mittels der Handerkennung wird festgestellt, dass der Fahrer seine Hände nicht am Lenkrad hat, wenn ermittelt wird, dass alle in einem vorgegebenen Zeitintervall auf eine Lenkung des Kraftfahrzeugs aufgebrachten Lenkmomente unterhalb der vorgegebenen Lenkmomentgrenze liegen. Mit anderen Worten muss der Fahrer ein größeres Lenkmoment auf die Lenkung des Kraftfahrzeugs aufbringen, wenn die gemessenen Vibrationen den vorgegebenen Schwellenwert überschreiten, um sicherzustellen, dass die Handerkennung nicht feststellt, dass der Fahrer keine Hand am Lenkrad hat. Das Heraufsetzen der Lenkmomentgrenze der Handerkennung stellt sicher, dass eine Wahrscheinlichkeit dafür, dass die Handerkennung feststellt, dass der Fahrer seine Hände am Lenkrad hat, obwohl der Fahrer seine Hände nicht am Lenkrad hat und die jeweiligen Lenkmomente auf die Lenkung des Kraftfahrzeugs lediglich durch die Vibrationen des Kraftfahrzeugs verursacht sind, besonders gering gehalten werden kann. Ein fehlerhaftes Feststellen, dass der Fahrer seine Hände am Lenkrad hat, aufgrund von durch die Vibrationen auf die Lenkung aufgebrachten Lenkmomenten kann somit besonders gut vermieden werden.

In einer möglichen Ausgestaltung der Erfindung ist es vorgesehen, dass, wenn die gemessenen Vibrationen einen weiteren, höheren Schwellenwert überschreiten, eine maximale Fahrzeuggeschwindigkeit begrenzt wird und/oder eine Warnung ausgegeben wird und/oder ein Fahrerassistenzsystem passiviert wird. Dies bedeutet, dass, wenn die gemessenen Vibrationen besonders hoch sind und somit den weiteren, höheren Schwellenwert überschreiten, als Aktion der Fahrer des Kraftfahrzeugs hinsichtlich der Vibration des Kraftfahrzeugs gewarnt wird bzw. das Fahrerassistenzsystem deaktiviert wird, sodass beispielsweise kein assistierter Spurwechsel mehr möglich ist, bzw. eine maximal mögliche Höchstgeschwindigkeit des Kraftfahrzeugs herabgesetzt wird. Hierdurch kann trotz der festgestellten starken Vibrationen ein weiteres sicheres Steuern des Kraftfahrzeugs ermöglicht werden, damit das Kraftfahrzeug beispielsweise in eine Werkstatt gebracht werden kann. Beispielsweise kann die maximale Fahrzeuggeschwindigkeit auf 50 km/h limitiert werden, um jeweilige geschwindigkeitsabhängige Vibrationen des Kraftfahrzeugs besonders gering zu halten. Hierdurch kann eine Beschädigung von Kraftfahrzeugkomponenten aufgrund der Vibrationen besonders gering gehalten werden. Durch das Passivieren des Fahrerassistenzsystems kann ein aufgrund der Vibrationen fehlerhaftes Steuern des Kraftfahrzeugs mittels des Fahrerassistenzsystems vermieden werden.

Weitere Merkmale der Erfindung können sich aus der nachfolgenden Figurenbeschreibung sowie anhand der Zeichnung ergeben.

Die Zeichnung zeigt in:
Fig. 1 ein Verfahrensschema für ein Verfahren zum Betreiben eines Kraftfahrzeugs. Fehlgewuchtete Räder und auch Schneeketten können charakteristische, gewichtsabhängige Schwingungen in einem Kraftfahrzeug verursachen, die über eine Fourier-Transformation oder mittels einer künstlichen Intelligenz kategorisiert werden können. Diese Schwingungen können von einem Lenkmomentsensor erfasst werden und anschließend ausgewertet werden.

Eine verzogene Spur führt zu einem dauerhaften Offset und somit Versatz im Lenkmoment, welches aufzubringen ist, um geradeaus zu fahren. Dies kann sich insbesondere bei der Nutzung von Fahrerassistenzsystemen in einem asymmetrischen Fahrverhalten äußern. Charakteristika im Lenkmoment für unterschiedliche Fehlerfälle können ausgewertet werden, um daraufhin ein Fahrerassistenzsystem, wie das elektronische Stabilitätsprogramm, anzupassen. Zusätzlich können spezifische Warninformationen an den Fahrer ausgegeben werden, damit dieser das Problem beheben kann und keine eingeschränkte Performance von assistierten Systemen bzw. erhöhten Verschleiß in Kauf zu nehmen hat.

Weiterhin kann ein Problem von systematischen Fahrspurwechselabbrüchen angegangen werden, indem bei Erkennung eines leichten Fehlers in der Fahrwerksgeometrie eine Spurwechselapplikation angepasst wird. Die Spurwechselapplikation kann von maximaler Performance in Richtung Sicherheit der Durchführung verstellt werden, sodass der Fahrer auch bei leicht verstellter Spur einen automatisierten Fahrspurwechsel ohne Abbrüche erleben kann. Der Spurwechsel kann hierdurch langsamer als unter Idealbedingungen durchgeführt werden, wird dafür aber seltener abgebrochen.

In Fig. 1 ist ein Verfahrensschema für ein Verfahren zum Betreiben eines Kraftfahrzeugs gezeigt. Bei dem Verfahren ist es vorgesehen, dass in einem ersten Verfahrensschritt V31 anhand von in einem Fahrwerk des Kraftfahrzeugs auftretenden Vibrationen eine Unwucht von Rädern des Kraftfahrzeugs und/oder ein Vorhandensein von Schneeketten an den Rädern des Kraftfahrzeugs erkannt wird. Die Auswertung der Unwucht kann über eine schnelle Fourier-Transformation und somit über eine schnelle Frequenzanalyse erfolgen. In einem zweiten Verfahrensschritt V32 des Verfahrens ist vorgesehen, dass, wenn die gemessenen Vibrationen einen vorgegebenen ersten Schwellenwert überschreiten, eine Lenkmomentgrenze einer Handerkennung heraufgesetzt wird. Die Handerkennung ist dazu eingerichtet, festzustellen, dass der Fahrer seine Hände nicht am Lenkrad hat, wenn ermittelt wird, dass alle in einem vorgegebenen Zeitintervall auf eine Lenkung des Kraftfahrzeugs aufgebrachten Lenkmomente unterhalb der Lenkmomentgrenze liegen. Das bedeutet, dass die Lenkmomentgrenze für eine ermittelte Fahreraktivität heraufgesetzt wird, wenn festgestellt wird, dass die ermittelten Vibrationen den ersten Schwellenwert überschreiten. Bei dem Anpassen der Lenkmomentgrenze kann diese beispielsweise von 0,5 Nm auf 0,8 Nm hochgesetzt werden. Hierdurch wird bewirkt, dass Hands-off-Warnungen vom Kraftfahrzeug ausgegeben werden, wenn der Fahrer keine Hand am Lenkrad hat, aber ein Lenkmoment erkannt worden ist, welches durch das Kraftfahrzeug, insbesondere Vibrationen, entsteht.

Wird festgestellt, dass die gemessenen Vibrationen einen im Vergleich zum ersten Schwellenwert höheren, zweiten Schwellenwert überschreiten, dann werden eine maximale Fahrzeuggeschwindigkeit begrenzt und/oder eine Warnung im Kraftfahrzeug ausgegeben und/oder ein Fahrerassistenzsystem passiviert. Als Warnung kann ein Popup im Kraftfahrzeug ausgegeben werden mit den Worten "Unwucht erkannt". Alternativ oder zusätzlich kann die Fahrzeuggeschwindigkeit für eine automatische Distanzregelung begrenzt, beispielsweise auf 50 km/h limitiert werden. Hierbei kann als Sicherheitsfunktion vorgesehen sein, dass der Fahrer durch einen Kick-down das Kraftfahrzeug auf eine Geschwindigkeit von mehr als 50 km/h beschleunigen kann.

Bei dem Verfahren kann somit zwischen zwei Stufen der Ausprägung des Problems und somit zwischen hohen Vibrationen und niedrigen Vibrationen unterschieden werden. Bei ermittelten niedrigen Vibrationen, welche höher sind als der erste Schwellenwert, aber niedriger sind als der zweite Schwellenwert, erfolgt die Anpassung der Lenkmomentgrenze, wohingegen beim Feststellen von Vibrationen, welche größer sind als der zweite Schwellenwert, der Fahrer über ein Popup dazu angewiesen wird, eine Werkstatt aufzusuchen, und/oder von der Vibration betroffene Fahrerassistenzsysteme gesperrt und somit deaktiviert werden.

Wird eine dieser beiden Flags gesetzt, von welchen eine erste "hohe Vibration oberhalb des zweiten Schwellenwerts" charakterisiert und die zweite "niedrige Vibration oberhalb des ersten Schwellenwerts und unterhalb des zweiten Schwellenwerts" charakterisiert, dann kann es vorgesehen sein, dass der Fahrer zu Beginn der nächsten Fahrt und somit nach einem Klemme-15-Wechsel über ein Popup im Human-Machine-Interface zu bestätigen hat, dass das Kraftfahrzeug kontrolliert worden ist. Anschließend kann das Verfahren neu mit der Überprüfung von Vibrationen starten. Erfolgt die Bestätigung nicht, dann werden für ein weiteres Verfahren die Flags beibehalten. Das bedeutet, dass für das weitere Verfahren durch die ausgelöste Aktion vorgenommene Fahrzeugeinstellungen des Kraftfahrzeugs beibehalten werden. Insbesondere werden diese Fahrzeugeinstellungen für weitere Fahrten des Kraftfahrzeugs beibehalten, bis bestätigt worden ist, dass das Kraftfahrzeug kontrolliert und ggf. repariert worden ist.

Ist die Vibration des Kraftfahrzeugs bekannt, dann kann eine Auslöseschwelle des elektronischen Stabilitätsprogramms angehoben werden. Alternativ oder zusätzlich kann einer Verteilung der Bremskraft angepasst werden, wenn erkannt wird, welches Rad die Unwucht aufweist.

Insgesamt zeigt die Erfindung wie ein Verfahren zur Erkennung charakteristischer Störungen im Lenkmomentverlauf und Adaption einer Fahrerassistenzfunktion erfolgen kann.

### Bezugszeichenliste

V31 bis V32 jeweilige Verfahrensschritte

## Patentansprüche

1. Verfahren zum Betreiben eines Kraftfahrzeugs, bei welchem:
- anhand von in einem Fahrwerk des Kraftfahrzeugs auftretenden Vibrationen eine Unwucht von Rädern des Kraftfahrzeugs und/oder ein Vorhandensein von Schneeketten an den Rädern des Kraftfahrzeugs erkannt wird, und
- wenn die gemessenen Vibrationen einen vorgegebenen Schwellenwert überschreiten, eine Lenkmomentgrenze einer Handerkennung heraufgesetzt wird, wobei die Handerkennung dazu eingerichtet ist, festzustellen, dass der Fahrer seine Hände nicht am Lenkrad hat, wenn ermittelt wird, dass alle in einem vorgegebenen Zeitintervall auf eine Lenkung des Kraftfahrzeugs aufgebrachten Lenkmomente die Lenkmomentgrenze unterschreiten.

2. Verfahren nach Anspruch 1, wobei wenn die gemessenen Vibrationen einen weiteren, höheren Schwellenwert überschreiten, eine maximale Fahrzeuggeschwindigkeit begrenzt wird und/oder eine Warnung ausgegeben wird und/oder ein Fahrerassistenzsystem passiviert wird.

## Claims

1. Method for operating a motor vehicle, in which:
- an imbalance of wheels of the motor vehicle and/or a presence of snow chains on the wheels of the motor vehicle is detected on the basis of vibrations occurring in a chassis of the motor vehicle, and
- if the measured vibrations exceed a predetermined threshold, a steering torque limit of a hand detection system is increased, wherein the hand detection system is configured to establish that the driver does not have their hands on the steering wheel if it is determined that all steering torques applied to a steering system of the motor vehicle within a predetermined time interval are below the steering torque limit.

2. Method according to claim 1, wherein, if the measured vibrations exceed a further, higher threshold, a maximum vehicle speed is limited and/or a warning is issued and/or a driver assistance system is deactivated.

## Revendications

1. Procédé permettant de faire fonctionner un véhicule automobile, dans lequel :
- un déséquilibre de roues du véhicule automobile et/ou une présence de chaînes à neige sur les roues du véhicule automobile sont détectés à l'aide de vibrations se produisant dans un châssis du véhicule automobile, et
- lorsque les vibrations mesurées dépassent par le haut une valeur seuil prédéfinie, une limite de couple de direction d'une reconnaissance des mains est augmentée, dans lequel la reconnaissance des mains est configurée pour constater que le conducteur n'a pas les mains sur le volant lorsqu'il est déterminé que tous les couples de direction appliqués à une direction du véhicule automobile dans un intervalle de temps prédéfini dépassent par le bas la limite de couple de direction.

2. Procédé selon la revendication 1, dans lequel, lorsque les vibrations mesurées dépassent par le haut une autre valeur seuil plus élevée, une vitesse de véhicule maximale est limitée et/ou un avertissement est émis et/ou un système d'aide à la conduite est passivé.
